# EUROPEAN PATENT APPLICATION

(11) **EP 4 718 808 A1**
(43) Date of publication of application: **01.04.2026**
(21) Application number: 24829911.7
(22) Date of filing: 29.02.2024
(51) Int. Cl.: H04L 43/0811

(54) **NETWORK LOOP POSITION DETECTION METHOD AND SYSTEM, AND STORAGE MEDIUM AND ELECTRONIC DEVICE**

(30) Priority: 30.06.2023 CN 202310804873
(71) Applicant: ZTE CORPORATION, Shenzhen, Guangdong 518057 (CN)
(72) Inventor: YIN, Zuoting, Shenzhen, Guangdong 518057 (CN)
(74) Representative: Carangelo, Pierluigi
(86) International application number: PCT/CN2024/079406
(87) International publication number: WO 2025/001255

(57) **Abstract**

Provided in the present disclosure are a network loop position detection method and system, and a storage medium and an electronic device. The method comprises: in response to the start of a loopback detection operation, generating a first loopback detection message, which carries first forwarding information corresponding to an egress port of a source device; sending the first loopback detection message to a forwarding device in a target network, wherein the forwarding device is used for instructing devices other than the source device in the target network, and the first loopback detection message is updated by means of adding second forwarding information corresponding to the forwarding device; receiving the updated first loopback detection message, and adding, to the first loopback detection message, first forwarding information corresponding to an ingress port of the source device, so as to generate a second loopback detection message; and performing network loop position detection on the target network on the basis of the second loopback detection message. The problems of a loop confirmation scheme for a network not being sufficiently direct, and being unable to determine the specific device and interface information of a network loop are solved.

## Description

### Cross-Reference to Related Application

The present disclosure claims priority to Chinese Patent Application No. 202310804873.7, filed with the China National Intellectual Property Administration on June 30, 2023 and entitled "Network Loop Position Detection Method and System, and Storage Medium and Electronic Device", which is incorporated herein by reference in its entirety.

### Technical Field

The present disclosure relates to the field of network transmission technologies, and in particular, to a network loop position detection method and system, and a storage medium and an electronic device.

### Background

A loop/loopback detection technology in the related art can only identify the presence of a loop in a current network and break the loop based on configuration, regardless of whether the loop-breaking action is reasonable or not. When the above loop/loopback detection technology is adopted, it is not possible to know what actions in the network led to the loop, or what the direct cause of the loop is, or how to break the loop present in the network more reasonably and optimally. This results in a lack of intuitive solutions for confirming a loop of the network and an inability to determine specific devices and interface information involved in the loop of the network, failing to provide effective guidance to network maintenance personnel.

In response to the aforementioned problems in the related art, no effective solutions have been found at present.

### Summary

Embodiments of the present disclosure provide a network loop position detection method and system, and a storage medium and an electronic device, which may at least solve the problems of a lack of intuitive solutions for confirming a loop of the network and an inability to determine specific devices and interface information involved in the loop of the network in the related art.

According to an embodiment of the present disclosure, a network loop position detection method is provided, which is applied to a source device in a target network and includes: generating a first loopback detection packet in response to a start of a loopback detection operation, wherein the first loopback detection packet carries first forwarding information corresponding to an egress port of the source device; sending the first loopback detection packet to a forwarding device in the target network, wherein the forwarding device is a device in the target network other than the source device, and the first loopback detection packet is updated by adding second forwarding information corresponding to the forwarding device; receiving the updated first loopback detection packet, and adding, to the first loopback detection packet, first forwarding information corresponding to an ingress port of the source device to generate a second loopback detection packet; and detecting a network loop position of the target network based on the second loopback detection packet.

According to an embodiment of the present disclosure, another network loop position detection method is provided, which is applied to a forwarding device other than a source device in a target network and includes: receiving a first loopback detection packet in response to a start of a loopback detection operation, wherein the first loopback detection packet is a packet generated by the source device in response to the start of the loopback detection operation and carries first forwarding information corresponding to an egress port of the source device; updating the first loopback detection packet according to second forwarding information corresponding to the forwarding device to obtain an updated first loopback detection packet; and forwarding the updated first loopback detection packet to a device in the target network, so that the device updates the first loopback detection packet according to forwarding information corresponding to the device, and the source device adds, in the received updated first loopback detection packet, first forwarding information corresponding to an ingress port of the source device to generate a second loopback detection packet, wherein the second loopback detection packet carries the second forwarding information corresponding to all of forwarding devices that forward the first loopback detection packet in the target network, and the second loopback detection packet is used to instruct the source device to detect a network loop position of the target network.

According to another embodiment of the present disclosure, a network loop position detection system is provided, including: a source device, configured to generate a first loopback detection packet in response to a start of a loopback detection operation, and send the first loopback detection packet to a forwarding device in the target network; receive the updated first loopback detection packet, add, to the first loopback detection packet, first forwarding information corresponding to an ingress port of the source device to generate a second loopback detection packet, and detecting a network loop position of the target network based on the second loopback detection packet, wherein the first loopback detection packet carries first forwarding information corresponding to an egress port of the source device, and the forwarding device is a device in the target network other than the source device; and the forwarding device, configured to receive a first loopback detection packet in response to the start of the loopback detection operation, and update the first loopback detection packet according to second forwarding information corresponding to the forwarding device to obtain the updated first loopback detection packet; and forward the updated first loopback detection packet to a device in the target network, so that the device updates the first loopback detection packet according to forwarding information corresponding to the device.

According to another embodiment of the present disclosure, a computer-readable storage medium is also provided. The computer-readable storage medium stores a computer program, wherein the computer program, when being executed by a processor, causes the processor to implement operations of the network loop position detection method in any one of the described method embodiments.

According to another embodiment of the present disclosure, an electronic device is also provided, which may include a memory and a processor, wherein the memory stores a computer program, and the processor is configured to run the computer program so as to execute operations of the network loop position detection method in any one of the method embodiments.

By means of the described contents, a source device generates a first loopback detection packet in response to a start of a loopback detection operation, sends the first loopback detection packet to a forwarding device in the target network, receives an updated first loopback detection packet, adds, to the first loopback detection packet, first forwarding information corresponding to an ingress port of the source device to generate a second loopback detection packet, and detects a network loop position of the target network based on the second loopback detection packet, wherein the first loopback detection packet carries first forwarding information corresponding to an egress port of the source device, and the forwarding device is a device in the target network other than the source device. The forwarding device receives the first loopback detection packet, updates the first loopback detection packet by using second forwarding information corresponding to the current forwarding device, so as to obtain the updated first loopback detection packet, and forwards the updated first loopback detection packet to a device in the target network, so that the other devices update the first loopback detection packet by using the forwarding information corresponding to the current forwarding device, the source device adds first forwarding information corresponding to an ingress port of the source device to the updated first loopback detection packet to generate a second loopback detection packet, and uses the second loopback detection packet to detect the network loop position in the target network. By virtue of the solution, the problems of a lack of intuitive solutions for confirming a loop of the network and an inability to determine specific devices and interface information involved in the loop of the network in the related art can be solved.

### Brief Description of the Drawings

Fig. 1 is a schematic structural diagram of a hardware structure of a mobile terminal for implementing a network loop position detection method according to some embodiments of the present disclosure;
Fig. 2 is a flowchart (1) of a network loop position detection method according to some embodiments of the present disclosure;
Fig. 3 is a flowchart (2) of a network loop position detection method according to some embodiments of the present disclosure;
Fig. 4 is a schematic structural diagram of a network loop position detection system according to some embodiments of the present disclosure;
Fig. 5 is a schematic structural diagram of a network composed of four devices according to some embodiments of the present disclosure;
Fig. 6 is a schematic structural diagram of a network loop position detection system according to some embodiments of the present disclosure; and
Fig. 7 is a schematic structural diagram of an electronic device according to some embodiments of the present disclosure.

### Detailed Description of the Embodiments

Hereinafter, the present disclosure will be described in detail with reference to the accompanying drawings and embodiments. It should be noted that the embodiments in the present disclosure and the features in the embodiments can be combined with each other without conflict.

It should be noted that, terms such as "first" and "second" in the description, claims, and accompanying drawings of the present disclosure are used to distinguish similar objects, but are not necessarily used to describe a specific sequence or order.

### Embodiment 1

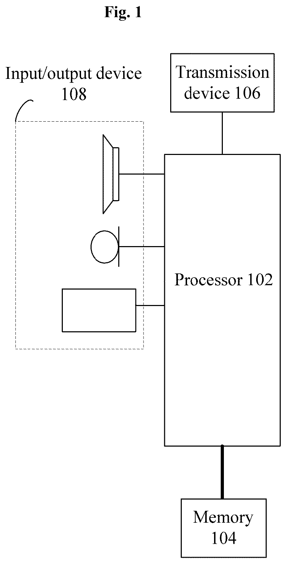

The network loop position detection method according to Embodiment 1 of the present disclosure may be implemented in a mobile terminal, a computer terminal, or a similar computing device. Taking the operation on a mobile terminal as an example, Fig. 1 is a schematic structural diagram of a hardware structure of a mobile terminal for implementing a network loop position detection method according to some embodiments of the present disclosure. As shown in Fig. 1, the mobile terminal 10 may include one or more (only one is shown in the figure) processors 102 (the one or more processors 102 may include but are not limited to processing devices such as a microprocessor (e.g., a Micro-Controller Unit (MCU)) or a programmable logic device (e.g., a Field Programmable Gate Array (FPGA))), a memory 104 for storing data, and a transmission device 106 for communication functions. Those having ordinary skill in the art may understand that the structure shown in Fig. 1 is merely exemplary, which does not limit the structure of the foregoing electronic device. For example, the mobile terminal 10 may also include more or fewer components than shown in Fig. 1, or have a different configuration than that shown in Fig. 1.

The memory 104 can be used for storing software programs and modules of application software, such as program instructions/modules corresponding to the network loop position detection method in the embodiments of the present disclosure. The processor 102 runs the software programs and modules stored in the memory 104, so as to execute various functional applications and data processing, i.e. to realize the described method. The memory 104 may include a high-speed random access memory, and may also include a non-volatile memory, such as one or more magnetic storage devices, flash memory, or other non-volatile solid-state memory. In some instances, the memory 104 may further include memory that is remotely located with respect to the one or more processors 102, and such remote memory may be connected to the mobile terminal 10 over a network. Examples of such networks may include, but are not limited to, the Internet, intranets, local area networks, mobile communication networks, and combinations thereof.

The transmission device 106 is used to receive or transmit data via a network. Specific examples of the described network may include a wireless network provided by a communication provider of the mobile terminal 10. In an embodiment, the transmission device 106 may include a Network Interface Controller (NIC) that may be coupled to other network devices via a base station to communicate with the Internet. In an embodiment, the transmission device 106 may be a Radio Frequency (RF) module for communicating wirelessly with the Internet.

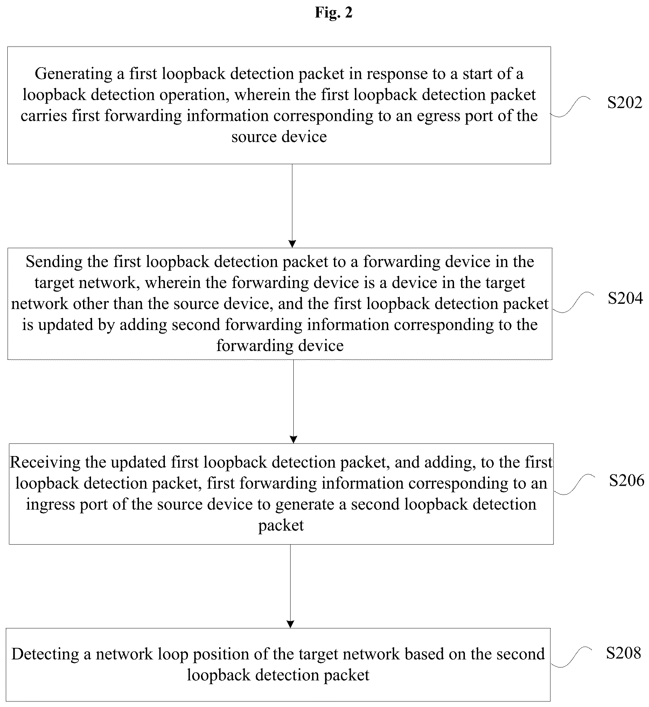

The embodiment provides a network loop position detection method, which is applied to a source device in a target network. Fig. 2 is a flowchart (1) of a network loop position detection method according to some embodiments of the present disclosure. As shown in Fig. 2, the flow may include, but is not limited to, the following operations S202 to S208.

In operation S202, a first loopback detection packet is generated in response to a start of a loopback detection operation, wherein the first loopback detection packet carries first forwarding information corresponding to an egress port of the source device.

It should be noted that the aforementioned source device is identified among the devices in the target network that can perform loopback detection operations, and is used to carry out functions related to packet decision-making and execution. This source device can be flexibly selected based on the actual application scenario, and this embodiment does not impose excessive restrictions on this selection.

It is understandable that, in order to better identify the first loopback detection packet sent to the forwarding device in the target network and to more efficiently identify the updated first loopback detection packet with the added second forwarding information from other forwarding devices forwarded back to the source device, thereby effectively recognizing whether the current target network has a loop, the source device needs to add the first forwarding information corresponding to the egress port to the first loopback detection packet. As an exemplary implementation, the aforementioned first forwarding information may include the following content: a service forwarding duration of sending the first loopback detection packet from the source device through the egress port, which is used to indicate a duration from the moment when the egress port is allowed to perform packet forwarding to a current moment of forwarding the first loopback detection packet, wherein there is supposed to be no state changes between these moments. The state changes refer to a process where a corresponding port on the device transitions from a first forwarding state, which allows service forwarding, to a second forwarding state, which prohibits service forwarding, and then transitions back to the first forwarding state that allows service forwarding. That is, the determination of the above-mentioned forwarding duration requires ensuring that between the two moments being calculated, the device has not restarted or experienced a change in the port state from Active (in use) to Inactive (not in use), and then back to Active (in use), so as to ensure the accuracy of the determined duration.

In operation S204, the first loopback detection packet is sent to a forwarding device in the target network, wherein the forwarding device is a device in the target network other than the source device, and the first loopback detection packet is updated by adding second forwarding information corresponding to the forwarding device.

For example, the first loopback detection packet sent by the source device includes the following content: Internet Protocol (IP) information of the source device, forwarding domain information of the loopback detection packet in the source device, information of the egress interface (i.e., egress port) from which the source device sends the loopback detection packet, and an Active duration (equivalent to the service forwarding duration in the present embodiment) of the egress interface. After the forwarding device connected to the source device receives the first loopback detection packet, the forwarding device adds, into the first loopback detection packet, IP information of the current forwarding device, forwarding domain information of the current forwarding device, information of an ingress interface (i.e., ingress port) where the first loopback detection packet enters the current forwarding domain, and Active duration information of the ingress interface.

Furthermore, after determining the egress interface through which the first loopback detection packet is forwarded by the forwarding device, the information of the egress interface and the Active duration of the egress interface are added to the first loopback detection packet to obtain an updated first loopback detection packet for the forwarding device. By adding the forwarding information corresponding to the forwarding device as described above, a record can be kept of the forwarding devices that the first loopback detection packet passes through after being sent from the source device. This recorded information allows for a quick reference to determine whether the devices that the first loopback detection packet goes through have a loop.

In operation S206, the updated first loopback detection packet is received, and first forwarding information corresponding to an ingress port of the source device is added to the first loopback detection packet to generate a second loopback detection packet.

In operation S208, a network loop position of the target network is detected based on the second loopback detection packet.

As an exemplary implementation, the second loopback detection packet carries the second forwarding information corresponding to all of forwarding devices that forward the first loopback detection packet in the target network.

In an exemplary implementation, when the updated first loopback detection packet is forwarded back to the source device through the forwarding device, it is determined that a loop has occurred in at least one forwarding device through which the current first loopback detection packet has passed, that is, there is a loop between the source device and the last device that updated the second forwarding information for the first loopback detection packet. Therefore, after the source device receives the updated first loopback detection packet, a second loopback detection packet is generated by adding the first forwarding information corresponding to the ingress port of the source device, so as to detect the network loop position in the target network.

By means of the described operations, a source device generates a first loopback detection packet in response to a start of a loopback detection operation, sends the first loopback detection packet to a forwarding device in the target network, receives an updated first loopback detection packet, adds, to the first loopback detection packet, first forwarding information corresponding to an ingress port of the source device to generate a second loopback detection packet, and detects a network loop position of the target network based on the second loopback detection packet, wherein the first loopback detection packet carries first forwarding information corresponding to an egress port of the source device. In this way, the detection of a network loop position among a plurality of devices in the target network is implemented through the updated forwarding information in the loopback detection packet. The solution solves the problems of a lack of intuitive solutions for confirming a loop of the network and an inability to determine specific devices and interface information involved in the loop of the network in the related art, thus, the effect of quickly finding the exact position of the interface or link causing a loop in the network is achieved.

In an exemplary embodiment, the foregoing operations may be, but are not limited to be, executed by a terminal with at least one display screen, and the like.

In an exemplary implementation, the operation S208 of detecting the network loop position of the target network based on the second loopback detection packet includes the following operations S11-S13.

In operation S11, the second loopback detection packet is parsed to determine the first forwarding information and the second forwarding information, wherein the first forwarding information at least includes a service forwarding duration of the source device, and the second forwarding information at least includes a service forwarding duration of each forwarding device.

In operation S12, a device with a shortest service forwarding duration is determined as a target forwarding device.

In operation S13, the network loop position of the target network is detected based on the target forwarding device.

It should be noted that after a loop occurs in the network, the source device that sends the first loopback detection packet will receive the first loopback detection packet that has been sent out and updated by a device. The updated first loopback detection packet records the forwarding information of the devices that the packet has passed through. Based on the forwarding information, the forwarding paths of the first loopback detection packet can be determined. By comparing the service forwarding durations of the corresponding ports in these forwarding paths, the forwarding interface(s)/forwarding path(s) with the shortest service forwarding duration can be calculated and the historical operation(s) of the forwarding interface(s)/forwarding path(s) can be identified. When the historical operation(s) of the forwarding interface(s)/forwarding path(s) are close in time to the moment when the loop occurs in the target network, it indicates that the historical operation(s) on the forwarding interface(s)/forwarding path(s) may be the direct cause of the loop in the network, thus allowing for the accurate determination of the position where the loop occurred in the target network.

In an exemplary implementation, the service forwarding duration indicates a time difference between a forwarding moment of latest active for service forwarding at a corresponding port of a current device and a current moment of forwarding the first loopback detection packet at the corresponding port of the current device, the corresponding port is an ingress port or an egress port, and a forwarding state of the corresponding port is not changed between the forwarding moment and the current moment.

It should be noted that the forwarding moment of latest active for service forwarding should satisfy the following condition: from the time the corresponding port starts packet forwarding to the time the corresponding port forwards the first loopback detection packet, the port state is always allowed for use (Active). This avoids the calculation of the service forwarding duration being affected by changes in the state of the devices or ports within the loop. For example, during the transmission of the first loopback detection packet among four devices A, B, C, and D, where A is the source device and B, C, and D are forwarding devices, a loop occurs between devices A and D. Consequently, when calculating the service forwarding duration, the service forwarding durations in the loop include: the service forwarding duration of the corresponding port of device A, the service forwarding duration of the corresponding port of device B, the service forwarding duration of the corresponding port of device C, and the service forwarding duration of the corresponding port of device D. However, if the state of the corresponding port of device B changes or device B is restarted, the service forwarding duration for the corresponding port of device B will not be reflected when updating the first loopback detection packet, which can subsequently cause discrepancies in the process of determining the loopback fault position based on the service forwarding duration.

In an exemplary implementation, the operation of detecting the network loop position of the target network based on the target forwarding device may include: querying a first moment of a history alarm operation or an alarm information generation corresponding to the target forwarding device, and a second moment of a loopback alarm generation of the target network; and in a case where the first moment is consistent with the second moment, determining a port with the shortest service forwarding duration of the target forwarding device to be a loopback fault position, wherein the first moment is consistent with the second moment in a case where a time difference between the first moment and the second moment is less than or equal to a preset time difference.

It should be noted that when the packet transmission paths of devices in the target network are operating normally, if a corresponding port of a device is adjusted from a closed state (Inactive) to an open state (Active), the recorded service forwarding duration after this port passes the first loopback detection packet will be shorter than that of other ports that have been continuously forwarding packets. If a loop occurs in the target network after this corresponding port is opened, the operation of opening this corresponding port and the corresponding port information can be used to determine whether it is the cause of the loop in the current target network, thereby quickly determining the loopback fault position in the target network.

Furthermore, to ensure that the identified loopback fault position is related to historical alarm operations or alarm information, the second moment of generating a loopback alarm in the corresponding network records of the target network is determined, and the first moments corresponding to historical alarm operations generated by executing different operations on the target forwarding device, or the first moments when alarm information caused by the target forwarding device appears, are/is also determined. When the time difference between the first and second moments is within an allowable error range, it indicates that the change in the corresponding port of the target forwarding device is the root cause of the loop appearing in the target network.

For example, assuming the preset time difference is 3 minutes, if the generation time of the loopback alarm in the target network is 14:46:53 on 2023-06-23, and the time when historical alarm operations or alarm information appears in the target forwarding device is 14:47:50 on 2023-06-23, with the time difference between the two being less than 3 minutes, it indicates that the port adjustment operation that caused the historical alarm operation or alarm information in the target forwarding device led to the loopback alarm in the target network after the operation was completed. It should be noted that the above preset time difference may be flexibly set based on the actual application requirements of the target network, and the above is just an example. As an exemplary implementation, the above preset time difference may also be 60 seconds, 90 seconds, etc.

In an exemplary implementation, after parsing the second loopback detection packet to determine the first forwarding information and the second forwarding information, the network loop position detection method further includes: determining one or more packet transmission paths in the target network; determining, for each of the one or more packet transmission paths, a first service forwarding duration corresponding to an ingress port of each target forwarding device through which the packet transmission path passes, and a second service forwarding duration corresponding to an egress port of the each target forwarding device; determining a total forwarding duration corresponding to the packet transmission path based on the first service forwarding duration and the second service forwarding duration; and determining a packet transmission path with a shortest total forwarding duration as a target path, wherein the target path is a packet transmission path containing a loopback fault position in the target network.

As an exemplary embodiment, it is also possible to parse the second loopback detection packet to determine the forwarding time of the egress port and the forwarding time of the ingress port of multiple forwarding devices in the target network. Further, when the packet transmission paths existing in the target network are obtained, the total forwarding duration of the forwarding devices in each packet transmission path can be determined. This allows, in the presence of forwarding devices and other packet transmission devices in the transmission path, the identification of the target path most likely to have loopback fault position from the multiple packet transmission paths corresponding to the target network. This provides data reference for subsequent network optimization, avoiding the long determination cycle caused by determining each packet transmission path one by one, and improves the efficiency of determining the specific loopback fault position in the target network.

In an exemplary implementation, after detecting the network loop position of the target network based on the second loopback detection packet, the network loop position detection method further includes: sending a detection result to a network management object, so as to instruct the network management object to perform network maintenance on the target network based on the detection result, wherein the detection result indicates forwarding information of a corresponding port causing a loopback fault in the target network or a packet transmission path containing a loopback fault position.

In an exemplary implementation, the first forwarding information further includes device information of the source device and domain information of a forwarding domain to which the source device belongs; the second forwarding information further includes device information of the forwarding device in the target network, domain information to which the forwarding device belongs, information of an ingress port at which the forwarding device acquires the first loopback detection packet, and information of an egress port at which the forwarding device forwards the updated first loopback detection packet.

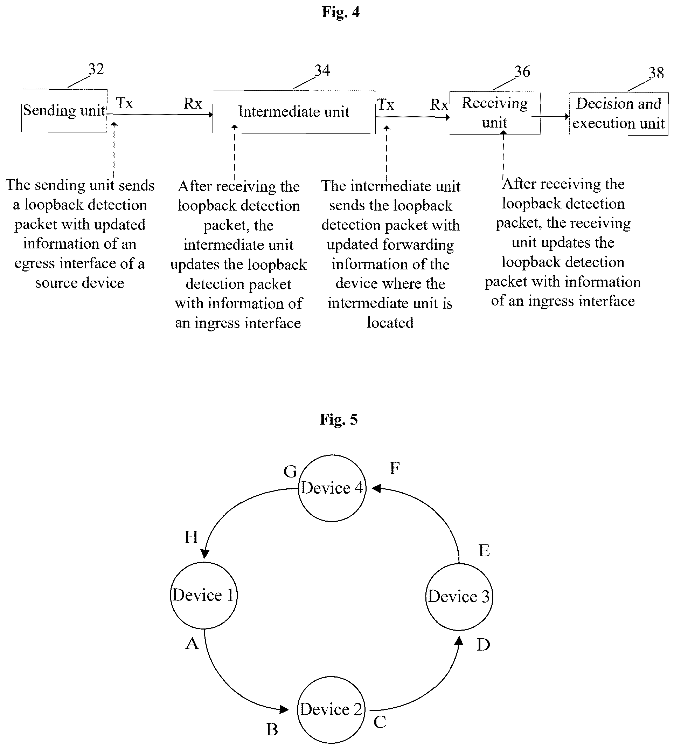

For example, a network formed by four devices is taken as an example, as shown in Fig. 5. When a loop occurs in the network, the direction of the loop in Fig. 5 is A->B->C->D->E->F->G->H, meaning that the first loopback detection packet is sent from port A (i.e., interface A) of device 1 (equivalent to the source device) and is received at port H (i.e., interface H) of device 1. Device 1 activates a loopback detection operation, with the corresponding sending unit, receiving unit, and decision and execution unit all located on device 1. Intermediate units for the loopback detection operation are deployed on devices 2, 3, and 4. After device 1 constructs a first loopback detection packet, the sending unit affixes first forwarding information corresponding to the egress interface of device 1, including the IP of device 1, forwarding domain information of the first loopback detection packet, information of the egress interface, and an active duration (equivalent to the service forwarding duration mentioned in the above implementation) of the egress interface, to the first loopback detection packet, and then sends the first loopback detection packet out from interface A. Device 2, upon receiving from interface B the first loopback detection packet sent by device 1, affixes second forwarding information corresponding to device 2, including the IP of device 2, forwarding domain information of the first loopback detection, information of the ingress interface, active duration of the ingress interface, information of the egress interface, and the active duration of the egress interface, to the first loopback detection packet and then sends the first loopback detection packet out from interface C. Device 3, upon receiving from interface D the loopback detection packet sent by device 1, affixes the second forwarding information corresponding to device 3, including the IP of device 3, forwarding domain information of the first loopback detection packet, information of the ingress interface, active duration of the ingress interface, information of the egress interface, and the active duration of the egress interface, to the first loopback detection packet and then sends the first loopback detection packet out from interface F. Device 4, upon receiving from interface F the loopback detection packet sent by device 1, affixes the second forwarding information corresponding to device 4, including the IP of device 4, forwarding domain information of the first loopback detection packet, information of the ingress interface, active duration of the ingress interface, information of the egress interface, and the active duration of the egress interface, to the first loopback detection packet, and then sends the out from interface G. Device 1, upon receiving from interface H the loopback detection packet sent by itself, affixes the first forwarding information corresponding to the ingress interface of device 1, including the IP of device 1, forwarding domain information of the first loopback detection packet, information of the ingress interface, and the active duration of the ingress interface, to the first loopback detection packet, so as to generate a second loopback detection packet and sends the second loopback detection packet to the decision and execution unit. The decision and execution unit, upon receiving the second loopback detection packet, confirms the occurrence of a loop in the network and determines the device interfaces or paths that may cause the network loop by comparing the active durations of the interfaces recorded in the second loopback detection packet. At the same time, the decision and execution unit saves the forwarding path information (recorded in the second loopback detection packet) of the devices through which the second loopback detection packet passes for network maintenance personnel to query.

In an exemplary implementation, after detecting the network loop position of the target network based on the second loopback detection packet, the network loop position detection method further includes: in a case where a loop is detected in the target network, monitoring states of multiple target forwarding devices within the loop to obtain monitoring results; and in a case where the monitoring results indicate that any of the target forwarding devices have undergone state adjustments, determining a detection result of detecting the network loop position of the target network based on the second loopback detection packet as invalid, and instructing to re-detect the target network after a preset detection period.

It is understandable that in a network loop, there may be third-party networks involved, or there may be changes in the states of devices or ports within the loop after the loop is formed. For example, after a loop occurs in the network, devices on the loop may be restarted; or after a loop occurs in the network, the states of interfaces on the loop may change from Active to Inactive and then back to Active, etc. In such cases, since the changed information has a certain impact on the detection result, it is necessary to avoid the above scenarios when performing network loop position detection in application scenarios to ensure the accuracy of the network loop position detection.

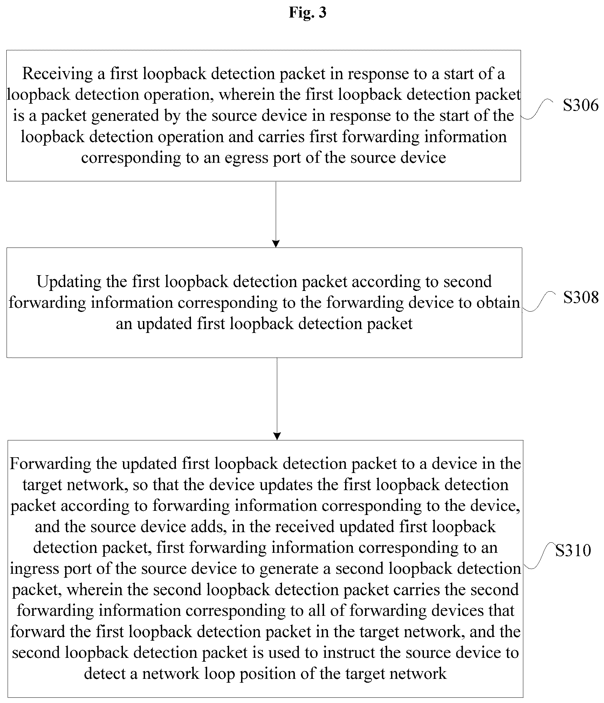

The embodiments of the present disclosure provide another network loop position detection method, which is applied to a forwarding device other than a source device in a target network. Fig. 3 is a flowchart (2) of a network loop position detection method according to some embodiments of the present disclosure. As shown in Fig. 3, the flow may include, but is not limited to, the following operations S306 to S310.

In operation S306, a first loopback detection packet is received in response to a start of a loopback detection operation, wherein the first loopback detection packet is a packet generated by the source device in response to the start of the loopback detection operation and carries first forwarding information corresponding to an egress port of the source device.

In operation S308, the first loopback detection packet is updated according to second forwarding information corresponding to the forwarding device to obtain an updated first loopback detection packet.

In operation S310, the updated first loopback detection packet is forwarded to a device in the target network, so that the device updates the first loopback detection packet according to forwarding information corresponding to the device, and the source device adds, in the received updated first loopback detection packet, first forwarding information corresponding to an ingress port of the source device to generate a second loopback detection packet, wherein the second loopback detection packet carries the second forwarding information corresponding to all of forwarding devices that forward the first loopback detection packet in the target network, and the second loopback detection packet is used to instruct the source device to detect a network loop position of the target network.

By means of the described operations, the forwarding device receives a first loopback detection packet, updates the first loopback detection packet by using second forwarding information corresponding to the current forwarding device, so as to obtain an updated first loopback detection packet, and forwards the updated first loopback detection packet to a device in the target network, so that the other devices update the first loopback detection packet through forwarding information corresponding to the current forwarding device, and the source device adds first forwarding information corresponding to the ingress port of the source device to the updated first loopback detection packet to generate a second loopback detection packet, and detects a network loop position of the target network based on the second loopback detection packet. In this way, the detection of the network loop position is implemented on a plurality of devices in the target network by using forwarding information updated in the loopback detection packet. The solution solves the problems of a lack of intuitive solutions for confirming a loop of the network and an inability to determine specific devices and interface information involved in the loop of the network in the related art, thus, the effect of quickly finding the exact position of the interface or link causing the loop of the network in the network is achieved, the optimization efficiency of network optimization is improved.

In order to facilitate the understanding of the embodiments of the present disclosure and the technical solutions of the exemplary embodiments, the flow of the above network loop position detection method will be explained below with reference to embodiments, but is not intended to limit the technical solutions of the embodiments of the present disclosure.

In an exemplary implementation, an exemplary embodiment of the present disclosure provides a network loop position detection method. When a loop occurs in the network, a source device is identified within the network for the initial transmission of a loopback detection packet. This method utilizes the first loopback detection packet sent by the source device, which is forwarded through multiple forwarding devices on the loop within the network. During the forwarding of the first loopback detection packet, second forwarding information related to the forwarding devices is added to the first loopback detection packet. Due to the presence of the loop in the network, the first loopback detection packet eventually returns to the destination device after being updated with multiple pieces of second forwarding information. It should be noted that in the case of network loop, the destination device is namely the source device, and the terms "source device" and "destination device" are primarily used in relation to the sending and termination of the first loopback detection packet.

That is, by updating the first loopback detection packet with second forwarding information related to the current device when forwarding devices send and forward the first loopback detection packet. Once the source device finally receives the first loopback detection packet sent by itself, the source device adds first forwarding information corresponding to the ingress port of the source device to create a second loopback detection packet. Based on the forwarding information of devices that the first loopback detection packet passed through in the network as recorded in the second loopback detection packet, the specific device interfaces or paths causing the network loop can be identified. This provides data support for analyzing the causes of network looping and reasonably resolving loop faults within the network.

As an exemplary implementation, the aforementioned forwarding information related to the device includes: a field identifying the current device information (which could be the device IP or device name); a field identifying a current forwarding domain to which the first loopback detection packet belongs; a field identifying the ingress interface (equivalent to the ingress port in the aforementioned implementation) where the first loopback detection packet enters the forwarding domain; a field identifying the Active duration of the ingress interface where the first loopback detection packet enters the forwarding domain; a field identifying the egress interface (equivalent to the egress port in the aforementioned implementation) where the first loopback detection packet exits the forwarding domain after being updated; and a field identifying the Active duration of the egress interface where the first loopback detection packet exits the forwarding domain after being updated.

In an exemplary implementation, Fig. 4 is a schematic structural diagram of a network loop position detection system according to some embodiments of the present disclosure. As shown in Fig. 4, the network loop position detection system may include the following units: a sending unit 32, an intermediate unit 34, a receiving unit 36, and a decision and execution unit 38.

As an exemplary implementation, for the loopback detection scenario, the sending unit, receiving unit, and decision and execution unit are all on the device that has deployed the loopback detection function, i.e., the aforementioned source device, while the intermediate (processing) unit is on the intermediate device through which the first loopback detection packet passes, i.e., the aforementioned forwarding device.

The sending unit 32 is deployed on the source device that sends the first loopback detection packet. The sending unit 32 is configured to construct the first loopback detection packet and add the first forwarding information corresponding to the source device before the first loopback detection packet is sent out from the egress interface, then send out the updated first loopback detection packet from the egress interface. The first forwarding information of the source device includes: IP information of the source device, the forwarding domain information of the first loopback detection packet on the source device, information of the egress interface from which the first loopback detection packet is sent out from the source device, and the Active duration of the egress interface.

The intermediate unit 34: After the forwarding device where the intermediate unit is located receives the first loopback detection packet, the intermediate unit 34 adds the IP information of the forwarding device where the intermediate unit is located, the forwarding domain information of the first loopback detection packet on the forwarding device where the intermediate unit is located, information of the ingress interface from which the first loopback detection packet enters the current forwarding domain, and the Active duration information of that ingress interface. After determining the egress interface for forwarding the first loopback detection packet, the intermediate unit 34 adds the information of the egress interface and the Active duration information of the egress interface to the first loopback detection packet and sends out the updated first loopback detection packet from that egress interface, wherein the information added by the aforementioned intermediate unit is referred to as the second forwarding information.

The receiving unit 36 is deployed on the destination device that receives the updated first loopback detection packet. The receiving unit 36 adds the IP information of the forwarding device where the intermediate unit is located, the forwarding domain information of the first loopback detection packet on the forwarding device where the intermediate unit is located, and adds the information of the ingress interface when the updated first loopback detection packet enters the current forwarding domain and the Active duration information of the ingress interface, so as to obtain the second loopback detection packet. Then, the receiving unit 36 sends this second loopback detection packet to the decision and execution unit.

The decision and execution unit 38 is deployed on the destination device. Based on the content of the received second loopback detection packet, the decision and execution unit 38 determines whether there is a loop in the current network, and decides whether it is necessary to block the interfaces in the loop according to the configuration. Based on the second forwarding information and the first forwarding information recorded in the second loopback detection packet, especially based on the Active duration information of the interfaces in the first and second forwarding information, the decision and execution unit 38 finds the interface and path with the shortest Active duration, and determines the device interface and path that may cause the loop in the network. The decision and execution unit 38 saves the path information of the first loopback detection packet that is updated and forwarded in the network recorded in the second loopback detection packet. Network maintenance personnel can confirm the device interfaces and paths that may cause the loop in the network by querying the information in the loopback alarm or querying the forwarding path of the first loopback detection packet.

In an exemplary embodiment, the present disclosure relates to a network loop position detection method applied to the above network loop position detection system, and the network loop position detection method at least includes the following operations 1 to 4.

In operation 1, after a start of a loopback detection function, a device periodically sends a loopback detection packet. A sending unit of the device adds first forwarding information corresponding to the source device to the first loopback detection packet. The first forwarding information is information corresponding to an egress interface of the source device, and includes an IP address or name of the source device, forwarding domain information of the first loopback detection packet on the source device, information of the egress interface of the first loopback detection packet on the source device, and an Active duration information of the egress interface.

In operation 2, when the first loopback detection packet passes through the intermediate device, the first loopback detection packet is sent to the intermediate unit of the intermediate device. The intermediate unit adds second forwarding information corresponding to the current intermediate device to the first loopback detection packet, where the second forwarding information includes an IP or name of the intermediate device that the first loopback detection packet currently passes through, forwarding domain information of the first loopback detection packet in the current intermediate device, an ingress interface of the first loopback detection packet in the current intermediate device, and an Active duration information of the ingress interface, an egress interface of the first loopback detection packet in the current intermediate device, and an Active duration information of the egress interface, and the like.

In operation 3, when a loop occurs in the network, the first loopback detection packet is forwarded through the loop in the network, and finally returned to the destination device that sends the first loopback detection packet. In such a case, the destination device is actually the source device. After receiving the first loopback detection packet updated by the intermediate unit, the receiving unit on the destination device adds first forwarding information corresponding to the ingress interface corresponding to the destination device to the updated first loopback detection packet to obtain a second loopback detection packet. The forwarding information related to the destination device includes an IP or name of the destination device, forwarding domain information of the updated first loopback detection packet on the destination device, information of an ingress interface of the updated first loopback detection packet on the destination device, and an active duration of the ingress interface.

In operation 4, the receiving unit of the destination device sends the second loopback detection packet to the decision and execution unit. The decision and execution unit determines whether a loop occurs in the current network by parsing the content of the second loopback detection packet, and in a case where a loop occurs in the current network, the decision and execution unit acts according to device configuration, and provides for the client a means for querying the forwarding path information of the second loopback detection packet in the network. According to the information of the loop path that the first loopback detection packet passes through in the network recorded in the second loopback detection packet, it is determined that the path where the interface with the shortest Active duration is located is a direct reason that may cause the loop in the network.

As an exemplary implementation, a network formed by four devices is taken as an example, as shown in Fig. 5, Fig. 5 is a schematic structural diagram of a network composed of four devices according to some embodiments of the present disclosure. When a loop occurs in the network, the direction of the loop in Fig. 5 is A->B->C->D->E->F->G->H, meaning that the first loopback detection packet is sent from port A (i.e., interface A) of device 1 and is received at port H (i.e., interface H) of device 1. A first loopback detection packet is generated on device 1; a sending unit, a receiving unit and a decision and execution unit of the first loopback detection packet are all deployed on device 1; and an intermediate unit for processing the first loopback detection packet is deployed on device 2, device 3 and device 4.

After device 1 constructs the first loopback detection packet, the sending unit adds the first forwarding information related to the device, such as the IP of device 1, the forwarding domain information of the current first loopback detection packet, information of the egress interface and the Active duration of the egress interface, and then sends the first loopback detection packet from the interface A. The packet format of the updated first loopback detection packet sent by the interface A is as shown in Table 1.

**Table 1**

| |
|---|
| First loopback detection packet constructed by device 1 |
| IP of device 1 |
| Forwarding domain of device 1 |
| Egress interface A of the first loopback detection packet on device 1 |
| Active duration of egress interface A of the first loopback detection packet on device 1 |

After receiving from the interface B the first loopback detection packet sent by device 1, device 2 adds, into the first loopback detection packet, second forwarding information related to device 2, such as the IP of device 2, the forwarding domain information of the current first loopback detection packet, information of the ingress interface, the Active duration of the ingress interface, information of the egress interface, and the Active duration of the egress interface, and then sends the first loopback detection packet from the interface C. The format of the updated first loopback detection packet sent by the interface C is shown in Table 2.

**Table 2**

| |
|---|
| First loopback detection packet constructed by device 1 |
| IP of device 1 |
| Forwarding domain of device 1 |
| Egress interface A of the first loopback detection packet on device 1 |
| Active duration of egress interface A of the first loopback detection packet on device 1 |
| IP of device 2 |
| Forwarding domain of device 2 |
| Ingress interface B of the first loopback detection packet on device 2 |
| Active duration of egress interface B of the first loopback detection packet on device 2 |
| Egress interface C of the first loopback detection packet on device 2 |
| Active duration of egress interface C of the first loopback detection |
| packet on device 2 |

After receiving from the interface D the first loopback detection packet sent by device 1, device 3 adds, into the first loopback detection packet, the second forwarding information related to device 3, such as the IP of device 3, the forwarding domain information of the current first loopback detection packet, information of the ingress interface, the Active duration of the ingress interface, information of the egress interface, and the Active duration of the egress interface, and sends the first loopback detection packet from the interface F. The packet format of the updated first loopback detection packet sent by the interface F is shown in Table 3.

**Table 3**

| |
|---|
| First loopback detection packet constructed by device 1 |
| IP of device 1 |
| Forwarding domain of device 1 |
| Egress interface A of the first loopback detection packet on device 1 |
| Active duration of egress interface A of the first loopback detection packet on device 1 |
| IP of device 2 |
| Forwarding domain of device 2 |
| Ingress interface B of the first loopback detection packet on device 2 |
| Active duration of egress interface B of the first loopback detection packet on device 2 |
| Egress interface C of the first loopback detection packet on device 2 |
| Active duration of egress interface C of the first loopback detection packet on device 2 |
| IP of device 3 |
| Forwarding domain of device 3 |
| Ingress interface D of the first loopback detection packet on device 3 |
| Active duration of egress interface D of the first loopback detection packet on device 3 |
| Egress interface E of the first loopback detection packet on device 3 |
| Active duration of egress interface E of the first loopback detection packet on device 3 |

After receiving from the interface F the first loopback detection packet sent by device 1, device 4 adds, into the first loopback detection packet, the second forwarding information related to the device, such as the IP of device 4, the forwarding domain information of the current first loopback detection packet, information of the ingress interface, the Active duration of the ingress interface, information of the egress interface, and the Active duration of the egress interface, and sends the first loopback detection packet from the interface G. The format of the updated first loopback detection packet sent by the interface G is shown in Table 4.

**Table 4**

| |
|---|
| First loopback detection packet constructed by device 1 |
| IP of device 1 |
| Forwarding domain of device 1 |
| Egress interface A of the first loopback detection packet on device 1 |
| Active duration of egress interface A of the first loopback detection packet on device 1 |
| IP of device 2 |
| Forwarding domain of device 2 |
| Ingress interface B of the first loopback detection packet on device 2 |
| Active duration of egress interface B of the first loopback detection packet on device 2 |
| Egress interface C of the first loopback detection packet on device 2 |
| Active duration of egress interface C of the first loopback detection packet on device 2 |
| IP of device 3 |
| Forwarding domain of device 3 |
| Ingress interface D of the first loopback detection packet on device 3 |
| Active duration of egress interface D of the first loopback detection packet on device 3 |
| Egress interface E of the first loopback detection packet on device 3 |
| Active duration of egress interface E of the first loopback detection packet on device 3 |
| IP of device 4 |
| Forwarding domain of device 4 |
| Ingress interface F of the first loopback detection packet on device 4 |
| Active duration of egress interface F of the first loopback detection packet on device 4 |
| Egress interface G of the first loopback detection packet on device 4 |
| Active duration of egress interface G of the first loopback detection packet on device 4 |

After receiving from the interface H the first loopback detection packet sent by the first loopback detection packet, device 1 adds, into the first loopback detection packet, second forwarding information related to device 1, such as the IP of device 1, the forwarding domain information of the first loopback detection packet, information of the ingress interface, and the Active duration of the ingress interface, so as to generate a second loopback detection packet, and sends the second loopback detection packet to the decision and execution unit. The format of the second loopback detection packet sent to the decision and execution unit is shown in Table 5.

**Table 5**

| |
|---|
| First loopback detection packet constructed by device 1 |
| IP of device 1 |
| Forwarding domain of device 1 |
| Egress interface A of the first loopback detection packet on device 1 |
| Active duration of egress interface A of the first loopback detection packet on device 1 |
| IP of device 2 |
| Forwarding domain of device 2 |
| Ingress interface B of the first loopback detection packet on device 2 |
| Active duration of egress interface B of the first loopback detection packet on device 2 |
| Egress interface C of the first loopback detection packet on device 2 |
| Active duration of egress interface C of the first loopback detection packet on device 2 |
| IP of device 3 |
| Forwarding domain of device 3 |
| Ingress interface D of the first loopback detection packet on device 3 |
| Active duration of egress interface D of the first loopback detection packet on device 3 |
| Egress interface E of the first loopback detection packet on device 3 |
| Active duration of egress interface E of the first loopback detection packet on device 3 |
| IP of device 4 |
| Forwarding domain of device 4 |
| Ingress interface F of the first loopback detection packet on device 4 |
| Active duration of egress interface F of the first loopback detection packet on device 4 |
| Egress interface G of the first loopback detection packet on device 4 |
| Active duration of egress interface G of the first loopback detection packet on device 4 |
| IP of device 1 |
| Forwarding domain of device 1 |
| Ingress interface H of the first loopback detection packet on device 1 |
| Active duration of ingress interface H of the first loopback detection packet on device 1 |

After determining, according to the received second loopback detection packet, that a loop occurs in the network, the decision and execution unit compares the Active durations of the interfaces recorded in the second loopback detection packet to determine a device interface or path that may cause a loop in the network. Meanwhile, the forwarding path information of the devices that the packet passes through, which is recorded in the second loopback detection packet, is saved for a network maintainer to query.

It should be noted that by circulating the first loopback detection packet within the network where a loop has occurred, the first forwarding information carried in the first loopback detection packet finally returned to the source device and the second forwarding information can be obtained, and the Active durations of the interfaces included in the first forwarding information and the second forwarding information can be used to determine a target device where the loop has occurred in the current network, thereby achieving the detection of the network loop position. By using the Active duration of the interface instead of the UP duration of the interface used in related technologies, the solution avoids the imprecision that results from using a single type of moment for calculation.

In an exemplary implementation, the aforementioned Active duration of the interface is the duration that the device interface has been continuously in a state of forwarding service packets up to the current moment. If the device interface is not in a state of forwarding service packets at the current moment, the Active duration of that device interface is 0. That is, by counting the forwarding duration of the egress and ingress interfaces of different devices while they are forwarding the first loopback detection packet, the positioning of the device corresponding to the abnormal loopback forwarding point is achieved. Thereby, in practical use, the change that needs to be displayed on a network management interface can be determined by judging the Active duration of the interface. Through this change, network management entities can intuitively see which device or interface in the network, or which path, may have caused the loop in the network. Based on the first forwarding information and the second forwarding information in the second loopback detection packet, the specific device and interface information that caused the loop in the network can be intuitively queried.

As an exemplary implementation, in practical applications, the loopback detection function can be deployed in conjunction with the application in the present exemplary embodiments. When a loop occurs in the network, the first forwarding information and the second forwarding information recorded in the second loopback detection packet can directly indicate the interface or link that may cause the loop in the network. Furthermore, when there is no loop in the network, by deploying the receiving unit and the decision and execution unit on the intermediate device (without deploying the intermediate unit), all forwarding paths from the source device sending the loopback detection packet to the destination device (i.e., the source device) that receives the updated first loopback detection packet can be queried based on the first forwarding information and the second forwarding information recorded in the second loopback detection packet.

In summary, through the aforementioned implementation methods, the exemplary embodiments of the present disclosure can provide direct assistance in quickly finding the exact position of the interface or link in the network that causes the loop, compared to existing technologies. This helps fundamentally solve the loop problems in the network or optimize the existing loop problems from the perspective of network optimization.

Through the description of the foregoing embodiments, those having ordinary skill in the art may clearly understand that the network loop position detection method according to the foregoing embodiments may be implemented by software in addition to a necessary universal hardware platform, and definitely may also be implemented by hardware. However, in many cases, the former is a preferred implementation. Based on such understanding, the essence of the technical solution of the present disclosure or the part contributing to the related art may be embodied in the form of a software product. The computer software product is stored in a storage medium (such as a Read-Only Memory (ROM)/Random Access Memory (RAM), a magnetic disk, and an optical disk), and may include a plurality of instructions for instructing a terminal device (which may be a mobile phone, a computer, a server, a network device, or the like) to execute the method provided in the various embodiments of the present disclosure.

### Embodiment 2

A network loop position detection system is provided in this embodiment. The network loop position detection system is used for implementing the described embodiments and embodiment implementations, and what has been described will not be elaborated. The term "module", as used hereinafter, is a combination of software and/or hardware capable of realizing a predetermined function. Although the network loop position detection system described in the following embodiments is preferably implemented by software, implementation of hardware or a combination of software and hardware is also possible and conceived.

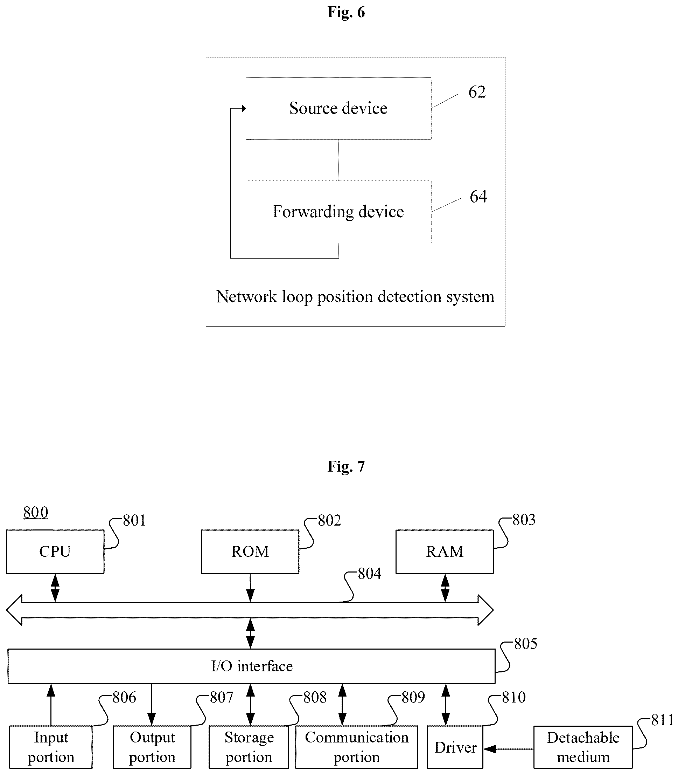

Fig. 6 is a schematic structural diagram of a network loop position detection system according to some embodiments of the present disclosure. As shown in Fig. 6, the network loop position detection system may include:
a source device 62, configured to generate a first loopback detection packet in response to a start of a loopback detection operation, and send the first loopback detection packet to a forwarding device in the target network; receive the updated first loopback detection packet, add, to the first loopback detection packet, first forwarding information corresponding to an ingress port of the source device to generate a second loopback detection packet, and detecting a network loop position of the target network based on the second loopback detection packet, wherein the first loopback detection packet carries first forwarding information corresponding to an egress port of the source device, and the forwarding device is a device in the target network other than the source device; and
a forwarding device 64, configured to receive a first loopback detection packet in response to the start of the loopback detection operation, and update the first loopback detection packet according to second forwarding information corresponding to the forwarding device to obtain the updated first loopback detection packet; and forward the updated first loopback detection packet to a device in the target network, so that the device updates the first loopback detection packet according to forwarding information corresponding to the device.

By means of the described network loop position detection system, a source device generates a first loopback detection packet in response to a start of a loopback detection operation, sends the first loopback detection packet to a forwarding device in the target network, receives an updated first loopback detection packet, and adds, to the first loopback detection packet, first forwarding information corresponding to an ingress port of the source device to generate a second loopback detection packet, and detects a network loop position of the target network based on the second loopback detection packet, wherein the first loopback detection packet carries first forwarding information corresponding to an egress port of the source device, and the forwarding device is a device in the target network other than the source device; the forwarding device receives the first loopback detection packet, updates the first loopback detection packet by the second forwarding information corresponding to the current forwarding device, so as to obtain the updated first loopback detection packet, forwards the updated first loopback detection packet to a device in the target network, so that the other devices update the first loopback detection packet by the forwarding information corresponding to the current forwarding devices, and the source device adds the first forwarding information corresponding to the ingress port of the source device to the updated first loopback detection packet to generate the second loopback detection packet, and detects a network loop position of the target network based on the second loopback detection packet. In this way, the detection of the network loop position among a plurality of devices in the target network is implemented by using the forwarding information updated in the loopback detection packet. The solution solves the problems of a lack of intuitive solutions for confirming a loop of the network and an inability to determine specific devices and interface information involved in the loop of the network in the related art, thus, the effect of quickly finding the exact position of the interface or link causing the loop in the network is achieved, and the optimization efficiency of network optimization is improved.

In an exemplary implementation, the source device 62 is further configured to parse the second loopback detection packet to determine the first forwarding information and the second forwarding information, wherein the first forwarding information at least includes a service forwarding duration of the source device, and the second forwarding information at least includes a service forwarding duration of each forwarding device; determine a device with a shortest service forwarding duration as a target forwarding device; and detect the network loop position of the target network based on the target forwarding device.

In an exemplary implementation, the service forwarding duration indicates a time difference between a forwarding moment of latest active for service forwarding at a corresponding port of a current device and a current moment of forwarding the first loopback detection packet at the corresponding port of the current device, the corresponding port is an ingress port or an egress port, and a forwarding state of the corresponding port is not changed between the forwarding moment and the current moment.

In an exemplary implementation, the source device 62 is further configured to query a first moment of a history alarm operation or an alarm information generation corresponding to the target forwarding device, and a second moment of a loopback alarm generation of the target network; and in a case where the first moment is consistent with the second moment, determine a port with the shortest service forwarding duration of the target forwarding device to be a loopback fault position, wherein the first moment is consistent with the second moment in a case where a time difference between the first moment and the second moment is less than or equal to a preset time difference.

In an exemplary implementation, the source device 62 further includes: a path unit, configured to determine one or more packet transmission paths in the target network after parsing the second loopback detection packet to determine the first forwarding information and the second forwarding information; determine, for each of the one or more packet transmission paths, a first service forwarding duration corresponding to an ingress port of each target forwarding device through which the packet transmission path passes, and a second service forwarding duration corresponding to an egress port of the each target forwarding device; determine a total forwarding duration corresponding to the packet transmission path based on the first service forwarding duration and the second service forwarding duration; and determine a packet transmission path with a shortest total forwarding duration as a target path, wherein the target path is a packet transmission path containing a loopback fault position in the target network.

In an exemplary implementation, the source device 62 is further configured to send a detection result to a network management object, so as to instruct the network management object to perform network maintenance on the target network based on the detection result, wherein the detection result indicates forwarding information of a corresponding port causing a loopback fault in the target network or a packet transmission path containing a loopback fault position.

In an exemplary implementation, the first forwarding information further includes device information of the source device and domain information of a forwarding domain to which the source device belongs; the second forwarding information further includes device information of the forwarding device in the target network, domain information to which the forwarding device belongs, information of an ingress port at which the forwarding device acquires the first loopback detection packet, and information of an egress port at which the forwarding device forwards the updated first loopback detection packet.

It should be noted that each module may be implemented by software or hardware. The latter may be implemented in the following manner, but is not limited thereto. All the modules are located in a same processor; alternatively, the modules are located in different processors in an arbitrary combination.

To facilitate the understanding of the technical solutions provided by the present disclosure, the technical solution is described in detail with reference to the embodiments of specific scenarios.

The embodiments of the present disclosure also provide a computer-readable storage medium. The computer-readable storage medium stores a computer program, wherein the computer program, when being executed on a processor, causes the processor to execute the operations in any one of the described method embodiments.

In an exemplary embodiment, the computer-readable storage medium may include, but is not limited to, any medium that can store a computer program, such as a Universal Serial Bus (USB) flash drive, an ROM, an RAM, a removable hard disk, a magnetic disk, or an optical disc.

The embodiments of the present disclosure further provide an electronic device, which may include a memory and a processor. The memory stores a computer program. The processor is configured to run the computer program to execute operations in any one of the foregoing method embodiments.

In this embodiment, the processor may be configured to execute the following operations by means of a computer program:
S1, generating a first loopback detection packet in response to a start of a loopback detection operation, wherein the first loopback detection packet carries first forwarding information corresponding to an egress port of the source device;
S2, sending the first loopback detection packet to a forwarding device in the target network, wherein the forwarding device is a device in the target network other than the source device, and the first loopback detection packet is updated by adding second forwarding information corresponding to the forwarding device;
S3, receiving the updated first loopback detection packet, and adding, to the first loopback detection packet, first forwarding information corresponding to an ingress port of the source device to generate a second loopback detection packet; and
S4, detecting a network loop position of the target network based on the second loopback detection packet.

According to an aspect of the present disclosure, a computer program product is provided, wherein the computer program product includes a computer program/instruction, and the computer program/instruction contains a program code for executing the network loop position detection method shown in the flowchart. In such embodiments, the computer program may be downloaded and installed from the network via communications portion 809 and/or installed from removable media 811. When the computer program is executed by a central processor 801, various functions provided in the embodiments of the present disclosure are executed. The serial numbers of the embodiments of the present disclosure are only for description, and do not represent the preference of the embodiments.

Fig. 7 is a schematic structural diagram of a computer system of an electronic device according to some embodiments of the present disclosure. As shown in Fig. 7, a computer system 800 includes a Central Processing Unit (CPU) 801 that can perform various suitable actions and processes in accordance with a program stored in a Read-Only Memory (ROM) 802 or a program loaded from a storage portion 808 into a Random Access Memory (RAM) 803. In the RAM 803, various programs and data necessary for the operation of the system are also stored. The CPU 801, the ROM 802, and the RAM 803 are connected to each other through a bus 804. An Input/Output interface 805 (i.e. I/O interface) is also connected to the bus 804.

The following components are connected to the input/output interface 805: an ingress portion 806 including a keyboard, a mouse, etc.; an output section 807 including, for example, a Cathode Ray Tube (CRT), a Liquid Crystal Display (LCD), and a speaker; a storage portion 808 including a hard disk or the like; and a communication section 809 including a network interface card such as a LAN card, a modem, and the like. The communication section 809 performs communication processing via a network such as the Internet. A driver 810 is also connected to the input/output interface 805 as needed. A removable medium 811 such as a magnetic disk, an optical disk, a magneto-optical disk, a semiconductor memory, or the like is mounted on the drive 810 as necessary so that a computer program read therefrom is installed into the storage portion 808 as necessary.

In particular, the processes described in the various method flowcharts may be implemented as computer software programs in accordance with the embodiments of the present disclosure. For example, the embodiments of the present disclosure include a computer program product including a computer program carried on a computer-readable medium. The computer program includes a program code for executing the network loop position detection method as shown in the flowchart. In such embodiments, the computer program may be downloaded and installed from the network via communications portion 809 and/or installed from removable media 811. When the computer program is executed by the CPU 801, various functions defined in the system of the present disclosure are executed.

It should be noted that the computer system 800 of the electronic device shown in Fig. 7 is only an example, and shall not impose any limitation on the functions and application scope of the embodiments of the present disclosure.

For specific examples in this example, reference may be made to the examples described in the foregoing embodiments and exemplary implementations, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing device, and thus can be stored in a storage apparatus and executed by the computing device. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

## Claims

1. A network loop position detection method, which is applied to a source device in a target network, wherein the network loop position detection method comprises:
generating a first loopback detection packet in response to a start of a loopback detection operation, wherein the first loopback detection packet carries first forwarding information corresponding to an egress port of the source device;
sending the first loopback detection packet to a forwarding device in the target network, wherein the forwarding device is a device in the target network other than the source device, and the first loopback detection packet is updated by adding second forwarding information corresponding to the forwarding device;
receiving the updated first loopback detection packet, and adding, to the first loopback detection packet, first forwarding information corresponding to an ingress port of the source device to generate a second loopback detection packet; and
detecting a network loop position of the target network based on the second loopback detection packet.

2. The network loop position detection method according to claim 1, wherein detecting the network loop position of the target network based on the second loopback detection packet comprises:
parsing the second loopback detection packet to determine the first forwarding information and the second forwarding information, wherein the first forwarding information at least comprises a service forwarding duration of the source device, and the second forwarding information at least comprises a service forwarding duration of each forwarding device;
determining a device with a shortest service forwarding duration as a target forwarding device; and
detecting the network loop position of the target network based on the target forwarding device.

3. The network loop position detection method according to claim 2, wherein the service forwarding duration indicates a time difference between a forwarding moment of latest active for service forwarding at a corresponding port of a current device and a current moment of forwarding the first loopback detection packet at the corresponding port of the current device, the corresponding port is an ingress port or an egress port, and a forwarding state of the corresponding port is not changed between the forwarding moment and the current moment.

4. The network loop position detection method according to claim 2, wherein detecting the network loop position of the target network based on the target forwarding device comprises:
querying a first moment of a history alarm operation or an alarm information generation corresponding to the target forwarding device, and a second moment of a loopback alarm generation of the target network; and
in a case where the first moment is consistent with the second moment, determining a port with the shortest service forwarding duration of the target forwarding device to be a loopback fault position, wherein the first moment is consistent with the second moment in a case where a time difference between the first moment and the second moment is less than or equal to a preset time difference.

5. The network loop position detection method according to claim 2, wherein after parsing the second loopback detection packet to determine the first forwarding information and the second forwarding information, the network loop position detection method further comprises:
determining one or more packet transmission paths in the target network;
determining, for each of the one or more packet transmission paths, a first service forwarding duration corresponding to an ingress port of each target forwarding device through which the packet transmission path passes, and a second service forwarding duration corresponding to an egress port of the each target forwarding device;
determining a total forwarding duration corresponding to the packet transmission path based on the first service forwarding duration and the second service forwarding duration; and
determining a packet transmission path with a shortest total forwarding duration as a target path, wherein the target path is a packet transmission path containing a loopback fault position in the target network.

6. The network loop position detection method according to claim 1, wherein after detecting the network loop position of the target network based on the second loopback detection packet, the network loop position detection method further comprises:
sending a detection result to a network management object, so as to instruct the network management object to perform network maintenance on the target network based on the detection result, wherein the detection result indicates forwarding information of a corresponding port causing a loopback fault in the target network or a packet transmission path containing a loopback fault position.

7. The network loop position detection method according to claim 1, wherein,
the first forwarding information further comprises device information of the source device and domain information of a forwarding domain to which the source device belongs;
the second forwarding information further comprises device information of the forwarding device in the target network, domain information to which the forwarding device belongs, information of an ingress port at which the forwarding device acquires the first loopback detection packet, and information of an egress port at which the forwarding device forwards the updated first loopback detection packet.

8. A network loop position detection method, which is applied to a forwarding device other than a source device in a target network, wherein the network loop position detection method comprises:
receiving a first loopback detection packet in response to a start of a loopback detection operation, wherein the first loopback detection packet is a packet generated by the source device in response to the start of the loopback detection operation and carries first forwarding information corresponding to an egress port of the source device;
updating the first loopback detection packet according to second forwarding information corresponding to the forwarding device to obtain an updated first loopback detection packet; and
forwarding the updated first loopback detection packet to a device in the target network, so that the device updates the first loopback detection packet according to forwarding information corresponding to the device, and the source device adds, in the received updated first loopback detection packet, first forwarding information corresponding to an ingress port of the source device to generate a second loopback detection packet,
wherein the second loopback detection packet carries the second forwarding information corresponding to all of forwarding devices that forward the first loopback detection packet in the target network, and the second loopback detection packet is used to instruct the source device to detect a network loop position of the target network.

9. A network loop position detection system, comprising:
a source device, configured to generate a first loopback detection packet in response to a start of a loopback detection operation, and send the first loopback detection packet to a forwarding device in the target network; receive the updated first loopback detection packet, add, to the first loopback detection packet, first forwarding information corresponding to an ingress port of the source device to generate a second loopback detection packet, and detecting a network loop position of the target network based on the second loopback detection packet, wherein the first loopback detection packet carries first forwarding information corresponding to an egress port of the source device, and the forwarding device is a device in the target network other than the source device; and
the forwarding device, configured to receive a first loopback detection packet in response to the start of the loopback detection operation, and update the first loopback detection packet according to second forwarding information corresponding to the forwarding device to obtain the updated first loopback detection packet; and forward the updated first loopback detection packet to a device in the target network, so that the device updates the first loopback detection packet according to forwarding information corresponding to the device.

10. A computer-readable storage medium, wherein the computer-readable storage medium stores a computer program, and the computer program, when being executed by a processor, causes the processor to implement operations of the network loop position detection method according to any one of claims 1 to 8.

11. An electronic device, comprising a memory, a processor and a computer program stored on the memory and capable of running on the processor, wherein the processor, when executing the computer program, implements operations of the network loop position detection method according to any one of claims 1 to 8.
